# FASCICULE DE BREVET EUROPEEN

(11) **EP 4 347 363 B1**
(45) Date de publication et mention de la délivrance du brevet: **29.10.2025**
(21) Numéro de dépôt: 22731242.8
(22) Date de dépôt: 01.06.2022
(51) Int. Cl.: B62D 35/00, G01S 7/481, G01S 13/931, G01S 17/931

(54) **ELÉMENT DE CARÉNAGE AÉRODYNAMIQUE ARRIÈRE DE VÉHICULE AUTOMOBILE INSTRUMENTÉ**
AERODYNAMISCHES HECKVERKLEIDUNGSELEMENT FÜR EIN INSTRUMENTIERTES KRAFTFAHRZEUG
REAR AERODYNAMIC FAIRING ELEMENT FOR AN INSTRUMENTED MOTOR VEHICLE

(30) Priorité: 02.06.2021 FR 2105787
(43) Date de publication de la demande: 10.04.2024
(73) Titulaire: Renault s.a.s, 92100 Boulogne Billancourt (FR)
(72) Inventeur: SEIGNEUR, Quentin, 78288 GUYANCOURT GUYANCOURT (FR)
(86) Numéro de dépôt international: PCT/EP2022/064984
(87) Numéro de publication internationale: WO 2022/253931

(56) Documents cités:
- EP-A2- 2 808 694
- WO-A1-2020/023868
- FR-A1- 3 098 771

## Description

La présente invention se rapporte à un élément de carénage aérodynamique arrière de véhicule automobile comprenant un organe de détection de données d'environnement du véhicule permettant de détecter la présence d'un objet, en particulier d'un objet se trouvant dans l'angle mort du véhicule.

Un exemple d'utilisation particulièrement avantageux concerne la détection d'un objet dans les angles morts du véhicule, notamment dans l'angle mort latéral gauche et/ou l'angle mort latéral droit. Par angle mort du véhicule, on entend une zone visuellement non accessible au conducteur. A noter que le terme objet désigne aussi bien un objet mobile tel qu'un véhicule automobile, un piéton, etc., qu'un objet fixe tel qu'un véhicule à l'arrêt, un muret, un pylône etc. La nature des objets détectés dépendra en grande partie de l'application donnée aux organes de détection.

Ces organes de détection peuvent, par exemple, comprendre au moins un capteur de type radar et/ou lidar.

Par exemple, il est bien connu d'installer ces capteurs dans des coins du bouclier arrière du véhicule de sorte que leur angle de champ de vision soit orienté vers l'angle mort du véhicule et ainsi fournir des zones de détection d'angle mort optimales.

Le document FR 3 098 771 A1 décrit un élément de carénage aérodynamique arrière de véhicule automobile selon le préambule de la revendication 1.

Le bouclier arrière est un élément de carénage constituant la partie basse de la carrosserie du véhicule, au plus près du sol. Son rôle est d'assurer la sécurité en amortissant un choc par l'arrière du véhicule. Le bouclier arrière comprend une paroi externe, généralement moulée dans un matériau polymère, adaptée à venir s'étendre selon une direction transversale du véhicule automobile, sur toute la largeur de celui-ci et se prolongeant de chaque côté latéralement vers l'avant en formant un retour ou coin, lequel définit un logement interne. Le capteur de type radar ou lidar peut ainsi être reçu à l'intérieur de ce logement interne, situé derrière la paroi externe au niveau des coins de bouclier.

Cependant, l'installation des radars et lidars dans le véhicule doit satisfaire à des exigences relativement contraignantes pour permettre d'assurer une détection de l'environnement du véhicule qui soit opérationnelle.

En particulier, l'épaisseur de la paroi devant le capteur dans la zone d'implantation de celui-ci doit être uniforme ou constante, avec une tolérance faible sur l'écart d'épaisseur de l'ordre de +/- 0,1mm. Egalement, aucune pièce métallique ou chromée, ni aucun dispositif de type catadioptre ne doit se trouver dans le champ de vision du capteur. Egalement encore, la présence d'arêtes vives ou d'inhomogénéité de matière dans le champ de vision du capteur doit être proscrite.

Or, aujourd'hui, les concepteurs de véhicules prévoient de plus en plus des formes de carrosserie assez prononcées, notamment au niveau des galbes et de la resserrée arrière, de façon à conférer au véhicule à la fois un style marqué et des performances aérodynamiques améliorées. Cette tendance de design s'applique également au bouclier arrière, où l'on retrouve souvent des lignes de care très marquées, rendant difficilement compatible la bonne intégration des radars et lidars selon les principes exposés plus haut.

Dans ce contexte et compte tenu des exigences énoncées ci-dessus liées à l'installation des capteurs de type radar et lidar, il devient difficile de définir une zone d'implantation viable pour ces capteurs au niveau du bouclier arrière pour certains véhicules, sauf à contraindre trop fortement les développements stylistiques de ce bouclier, au détriment de l'esthétisme et/ou de l'aérodynamisme d'ensemble.

Aussi, un problème qui se pose et que vise à résoudre la présente invention est de proposer une zone d'implantation de tels capteurs destinés à détecter la présence d'un objet se trouvant dans l'angle mort du véhicule, qui soit exempte des limitations exposées ci-dessus.

A cette fin, l'invention concerne un élément de carénage aérodynamique arrière de véhicule automobile comprenant une paroi externe et au moins un logement interne délimité par ladite paroi externe, des moyens de fixation situés à l'intérieur dudit logement interne et au moins un organe de détection de données d'environnement du véhicule adapté à être solidarisé auxdits moyens de fixation de sorte que l'angle de champ de vision dudit organe de détection soit orienté vers l'angle mort du véhicule pour détecter la présence d'un objet se trouvant dans l'angle mort du véhicule lorsque ledit élément de carénage aérodynamique arrière est fixé sur le véhicule ; ledit élément de carénage aérodynamique arrière est constitué par un déflecteur latéral, essentiellement vertical, destiné à prolonger un déflecteur central adapté à venir s'étendre selon une direction transversale du véhicule dans le prolongement du pavillon du véhicule et en surplombant le hayon arrière du véhicule. Selon l'invention, l'élément de carénage comprend deux cloisons latérales définissant ledit logement interne, lesdits moyens de fixation comprenant une glissière agencée sur chaque cloison latérale pour recevoir respectivement à coulissement des moyens d'assemblage correspondants dudit organe de détection.

La fonction première de ce déflecteur latéral essentiellement vertical est d'améliorer l'écoulement des filets d'air à la surface de la carrosserie du véhicule et de diminuer la traînée, en vue de réduire les émissions de CO2 et aussi de contribuer à l'aspect esthétique du véhicule. Ainsi, une caractéristique de l'invention réside dans l'utilisation d'un élément de carénage déjà fonctionnel du véhicule, à savoir ce déflecteur latéral, encore nommé aileron ou « casquette », pour y loger les organes de détection destinés à la surveillance des zones d'angle mort du véhicule. L'implantation de ce déflecteur latéral sur le véhicule et sa configuration sont en effet particulièrement propices pour recevoir les organes de détection dédiés à la surveillance des zones d'angle mort du véhicule. Ainsi, ce déflecteur latéral essentiellement vertical, qui vient en prolongement du déflecteur central qui surplombe le hayon, encore nommé becquet arrière, s'étend au moins partiellement le long d'un bord latéral supérieur du hayon et se trouve donc être avantageusement situé dans une position qui correspond sensiblement à un coin arrière supérieur du véhicule, duquel l'angle mort du véhicule peut être surveillé de façon optimale.

De surcroît, ce déflecteur latéral, qui présente des dimensions de plus en plus importantes, pour améliorer l'aérodynamique du véhicule, est en général, dans son style, sans ligne de care au niveau de sa paroi externe ou sans trace de démoulage interne, et son épaisseur ne varie pas. Aussi, il se prête particulièrement bien aux exigences contraignantes régissant l'installation de capteur de type radar et lidar, dont l'intégration s'en trouve facilitée. Ainsi, la détection de l'environnement du véhicule notamment des zones d'angle mort, n'est plus gênée par la technique et/ou le style des éléments de carrosserie destinés à recevoir les organes de détection de l'environnement du véhicule et, en particulier, les concepteurs peuvent reprendre leur liberté sur les lignes de style du bouclier arrière.

D'autres caractéristiques et avantages de l'invention ressortiront clairement de la description qui en est faite ci-après, à titre indicatif et nullement limitatif, en référence aux dessins annexés sur lesquels :
[Fig. 1] est une vue schématique en perspective de l'arrière d'un véhicule automobile muni de l'objet de l'invention ;
[Fig. 2] est une vue schématique intérieure en perspective de l'objet de l'invention équipé d'un organe de détection de type capteur radar ;
[Fig. 3] est une vue schématique de l'implantation de l'objet de l'invention sur le véhicule avec son câblage, en vue de dessus ;
[Fig. 4] est une vue schématique en perspective d'un exemple d'application de l'objet de l'invention à la détection d'objet dans l'angle mort latéral arrière du véhicule.

Pour les besoins de la description, on se réfèrera à un repère orthonormé direct XYZ, classiquement utilisé en conception automobile, dans lequel l'axe X désigne la direction longitudinale du véhicule, orienté vers l'arrière, l'axe Y désigne la direction transversale et est orienté vers la droite du véhicule, et l'axe Z désigne la direction verticale, et est orienté vers le haut. Les termes « avant » et « arrière » sont ainsi utilisés pour désigner des éléments dans la direction longitudinale avant-arrière d'un véhicule automobile sur lesquels ils sont normalement positionnés, les termes « inférieurs » et « supérieurs » pour désigner des éléments selon l'axe vertical perpendiculaire à l'axe longitudinal du véhicule automobile, et « droite » et « gauche » pour désigner des directions selon l'axe transversal perpendiculaire à l'axe longitudinal du véhicule automobile.

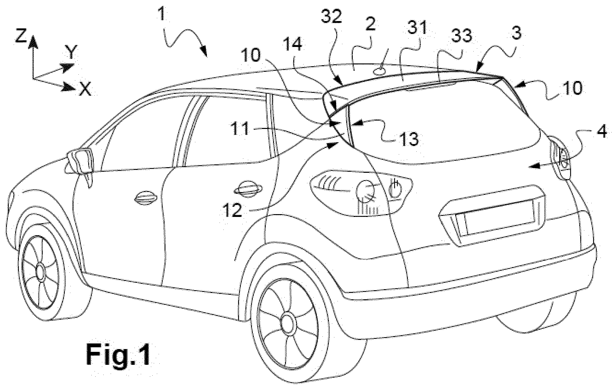

La figure 1 illustre le positionnement d'un élément de carénage aérodynamique 10 selon l'invention sur un véhicule automobile 1. La figure 1 montre l'arrière d'un véhicule automobile 1 présentant un pavillon 2 prolongé vers l'arrière d'un déflecteur central, nommé becquet arrière 3, venant en surplomb d'un hayon arrière 4. Ainsi, le béquet arrière 3 s'étend transversalement sur la largeur du pavillon 2 qu'il prolonge. Il comporte une paroi externe oblongue 31 laquelle présente un bord avant 32, venant bord à bord avec le pavillon 2, et un bord arrière 33 longeant le hayon 4. L'élément de carénage aérodynamique 10 selon l'invention est constitué par un déflecteur latéral, essentiellement vertical, qu'on appelle aussi « casquette », qui vient prolonger latéralement de chaque côté droit et gauche le becquet arrière 3, qui s'étend transversalement en haut du hayon. Le déflecteur latéral 10 comporte une paroi externe 11 et présente une forme globalement triangulaire dont les cotés constituent des bords 12, 13 et 14, respectivement un bord antérieur 12, destiné à venir bord à bord avec un bord supérieur du hayon arrière 4, un bord postérieur 13 opposé, destiné à être libre, et un bord supérieur 14, destiné à venir bord à bord avec une portion d'extrémité latérale du bord arrière 33 du becquet arrière 3, qui longe le hayon 4. La fixation du déflecteur latéral 10 aux éléments adjacents est assurée par des moyens de solidarisation réversible appropriés, par exemple par des clips glissière. La paroi externe 11 constitue une zone essentiellement uniforme, sans lignes de care ou trace de démoulage interne et d'épaisseur constante.

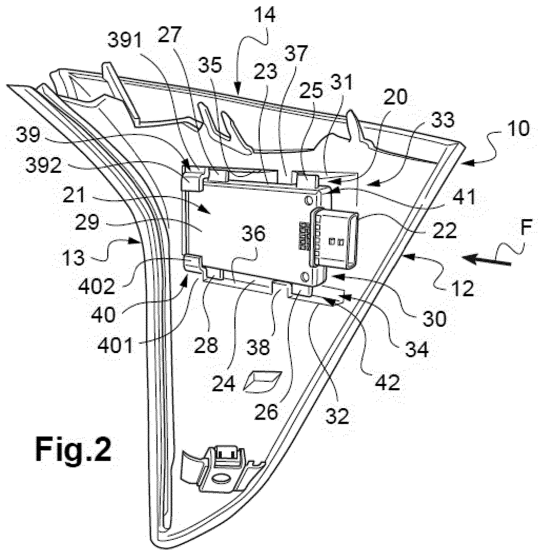

La figure 2, illustrant une vue intérieure du déflecteur latéral droit 10 du véhicule, dépourvu de sa paroi externe, montre un organe de détection de données d'environnement du véhicule 20, installé à l'intérieur d'un logement interne 30 du déflecteur latéral 10 situé entre deux cloisons latérales 31, 32, s'étendant parallèlement l'une à l'autre entre le bord antérieur 12 et le bord postérieur 13 du réflecteur latéral 10, définissant alors le logement interne. L'organe de détection 20 est ici un capteur radar permettant de détecter, dans l'environnement du véhicule, la présence et le volume d'objets distants situés dans son champ de vision, en émettant des ondes radio à partir d'au moins une antenne et en mesurant le temps de vol du signal réfléchi.

Ce capteur radar 20 peut être contenu dans un boîtier 21, de forme globalement parallélépipédique, par exemple en matière synthétique, destiné à être monté dans le logement interne du déflecteur latéral pourvu de moyens de fixation à cet effet, qui seront détaillés plus loin.

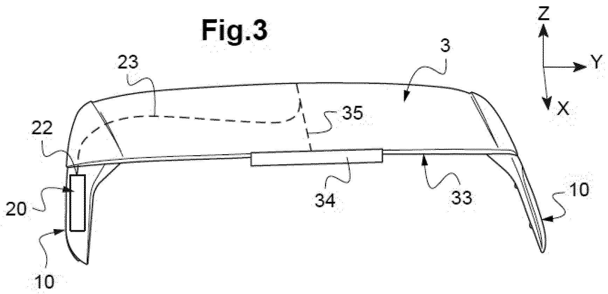

Le boîtier 21 comporte un connecteur 22 débouchant vers le bord antérieur 12 du déflecteur latéral 10, pour pouvoir le raccorder à un faisceau de câbles s'étendant vers des organes de traitement et de contrôle du véhicule. Comme illustré à la figure 3, le faisceau de câbles 23 destiné à être raccordé au capteur radar 20 par l'intermédiaire de son connecteur 22, est amené vers le déflecteur latéral 10 dans lequel est monté le capteur radar 20, en passant d'abord dans le becquet arrière 3, avant d'aboutir dans le déflecteur latéral 10 où il est relié au connecteur 22 du capteur radar 20. Selon l'exemple de la figure 3, le bord arrière 33 du becquet arrière accueille un feu stop 34 du véhicule, dont le câblage d'alimentation 35 circule également dans le becquet arrière 3.

Le boîtier 21 du capteur radar 20 comprend sur ses faces longitudinales latérales opposées 23, 24 des moyens d'assemblage destinés à l'insertion du capteur radar 20 dans le logement interne 15 du déflecteur latéral. Ces moyens d'assemblage comprennent, sur chaque face longitudinale latérale 23, 24 du boîtier, une languette antérieure 25, 26 et une languette postérieure 27, 28, faisant saillie perpendiculairement des faces longitudinales latérales 23, 24 du boîtier.

Les deux cloisons latérales 31, 32, s'étendant parallèlement l'une à l'autre entre le bord antérieur 12 et le bord postérieur 13 du réflecteur latéral 10 et qui définissent le logement interne 30 où est destiné à être monté le capteur radar 20, sont munies respectivement de deux profilés méplats 33, 34 s'étendant perpendiculairement au plan des cloisons latérales 31, 32. Les deux profilés méplats, respectivement 33, 34, présentent chacun une surface d'appui longitudinale, respectivement 35, 36, coplanaire entre elles. Les deux cloisons latérales 31, 32 sont également équipées chacune de deux pattes antérieure et postérieure, respectivement 37, 38 et 39, 40 s'étendant en surplomb des surfaces d'appui longitudinales 35, 36 des deux profilés méplats 33, 34. De la sorte, les deux profilés méplats 33, 34 et les pattes antérieure et postérieure, respectivement 37, 38 et 39, 40, définissent alors deux glissières en regard l'une de l'autre 41, 42.

En outre, et de façon particulièrement avantageuse, les deux profilés méplats 33, 34, et les pattes antérieure et postérieure, respectivement 37, 38 et 39, 40, sont moulés d'une seule pièce sur les deux cloisons latérales 31, 32. L'ensemble est par exemple moulé en matériau polymère de type ABS.

L'entrée d'insertion du capteur radar 20 dans le logement interne 30 est située du côté du bord antérieur 12 du déflecteur latéral 10. Ainsi, le capteur radar 20 peut être inséré dans le logement interne 30 en engageant les languettes antérieure et postérieure opposées du boîtier 25, 26 et 27, 28 dans les deux glissières respectivement 41, 42 entre les surfaces d'appui longitudinales 35, 36 des deux profilés méplats 33, 34 et les pattes antérieure et postérieure, respectivement 37, 38 et 39, 40, suivant la direction de montage illustrée par la flèche F sur la figure 2. En position de montage dans le logement interne 30, comme illustré figure 3, les languettes antérieure et postérieure 25, 26 et 27, 28 du boîtier 21 du capteur radar sont en prise respectivement sous les pattes antérieure et postérieure, respectivement 37, 38 et 39, 40,des cloisons latérales 31, 32 du logement interne 30. En position de montage, le connecteur 22 du capteur radar 20 est disposé à l'entrée du logement interne 30 du côté du bord antérieur 12 du déflecteur latéral 10. On prévoit que les pattes antérieure et postérieure, respectivement 37, 38 et 39, 40, sont espacés des surfaces d'appui longitudinales 35, 36 des deux profilés méplats 33, 34 d'une distance égale à l'épaisseur des languettes antérieure et postérieure opposées du boîtier 20 du capteur radar, de sorte que les languettes peuvent être entraînées à force entre ces éléments, tandis que les matériaux polymères se déforment sensiblement, assurant le maintien du boîtier par déformation élastique. Aussi, à l'extrémité des surfaces d'appui longitudinales 35, 36 des deux profilés méplats 33, 34, à l'opposé de l'entrée d'insertion dans le logement interne 30, des butées d'arrêt non représentées permettent de stopper le boîtier 21 du capteur lorsque les languettes postérieures rencontrent précisément les butées d'arrêt. De la sorte, le boîtier peut être positionné précisément au sein du logement interne du déflecteur latéral 10.

Selon un mode de réalisation, les pattes postérieures 39, 40 des cloisons latérales peuvent comprendre une première partie 391, 401, destinée à venir en prise contre les languettes postérieures 27, 28 du boîtier 21 lorsque ce dernier est inséré en position de montage dans le logement interne 30 et, en prolongement de cette première partie en formant un coude, une seconde partie 392, 402, formant surface d'appui destinée à venir en prise contre une face longitudinale supérieure 29 du boîtier 21, lorsque ce dernier est inséré en position de montage. De la sorte, le boîtier 21 du capteur radar 20 est parfaitement maintenu en position fixe par rapport au déflecteur latéral 10.

**Par ailleurs,** selon un autre mode de réalisation de l'invention non représenté, le déflecteur latéral comprend en outre un second logement interne, destiné à recevoir un autre organe de détection de l'environnement ou encore un organe de communication.

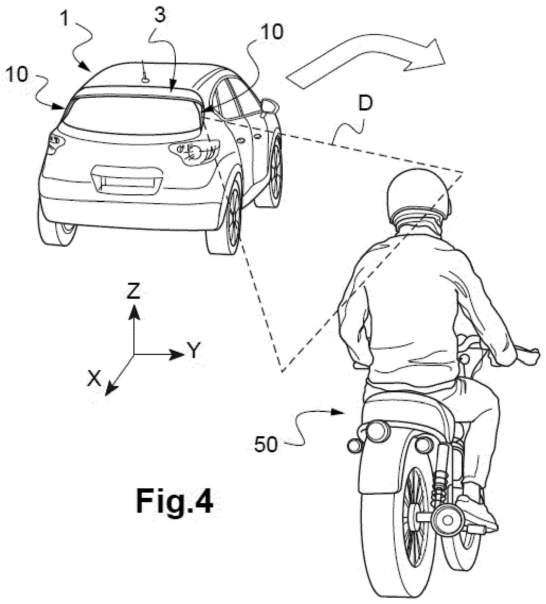

La figure 4, montre une vue en perspective arrière d'un véhicule automobile 1 équipé de déflecteurs latéraux 10 droit et gauche selon l'invention. Comme illustré sur la figure, le capteur radar en position de montage dans le déflecteur latéral droit 10 selon les principes exposés est particulièrement adapté pour surveiller l'angle latéral arrière droit du véhicule. Ainsi, le champ de vision D du capteur radar est orienté dans cette zone d'angle mort du véhicule. Aussi, un objet mobile surgissant dans cette zone, telle qu'une moto 50 selon l'exemple illustré, pourra être détecté par le capteur radar installé dans le déflecteur latéral droit 10.

## Revendications

1. Elément (10) de carénage aérodynamique arrière de véhicule automobile comprenant une paroi externe (11) et au moins un logement interne (30) délimité par ladite paroi externe, des moyens de fixation situés à l'intérieur dudit logement interne et au moins un organe (20) de détection de données d'environnement du véhicule adapté à être solidarisé auxdits moyens de fixation de sorte que l'angle de champ de vision (D) dudit organe de détection soit orienté vers l'angle mort du véhicule pour détecter la présence d'un objet se trouvant dans ledit angle mort lorsque ledit élément de carénage aérodynamique arrière est fixé sur le véhicule, ledit élément de carénage aérodynamique arrière étant constitué par un déflecteur latéral (10), essentiellement vertical, destiné à prolonger un déflecteur central (3) adapté à venir s'étendre selon une direction transversale du véhicule dans le prolongement du pavillon (2) du véhicule et en surplombant le hayon arrière (4) du véhicule, **caractérisé en ce que** l'élément de carénage comprend deux cloisons latérales (31, 32) définissant ledit logement interne (30), lesdits moyens de fixation comprenant une glissière (41, 42) agencée sur chaque cloison latérale pour recevoir respectivement à coulissement des moyens d'assemblage correspondants dudit organe de détection.

2. Elément de carénage selon la revendication précédente, **caractérisé en ce que** les glissières desdites cloisons latérales s'étendent en regard l'une de l'autre.

3. Elément de carénage selon la revendication 1 ou 2, **caractérisé en ce que**, ledit organe de détection (20) comprenant un boîtier (21) destiné à être inséré dans le logement interne, lesdits moyens d'assemblage comprennent des languettes (25, 26, 27, 28) faisant saillie perpendiculairement de faces longitudinales latérales (23, 24) du boîtier.

4. Elément de carénage selon la revendication précédente, **caractérisé en ce que** lesdites glissières (41, 42) comprennent chacune une butée d'arrêt en translation dudit boîtier.

5. Elément de carénage la revendication 3 ou 4, **caractérisé en ce que** lesdites languettes comprennent des languettes antérieure (25, 26) et postérieure (27, 28) adaptées à venir en prise respectivement sous des pattes antérieure (37, 38) et postérieure (39, 40) correspondantes des cloisons latérales surplombant une surface d'appui (35, 36) faisant saillie perpendiculairement desdites cloisons latérale pour former lesdites glissières.

6. Elément de carénage selon la revendication précédente, **caractérisé en ce que** lesdites pattes postérieures (39, 40) sont adaptées pour former une surface d'appui (392, 402) apte à venir en prise contre une surface longitudinale supérieure (29) dudit boîtier.

7. Elément de carénage selon l'une quelconque des revendications précédentes, **caractérisé en ce que** ledit organe de détection (20) comprend un connecteur (22) pour la connexion dudit organe de détection à un faisceau de câbles (23), ledit faisceau de câble étant amené vers ledit déflecteur latéral en passant dans le déflecteur central.

8. Véhicule automobile comprenant un élément de carénage aérodynamique (10) selon l'une quelconque des revendications précédentes.

## Patentansprüche

1. Aerodynamisches Heckverkleidungselement (10) für ein Kraftfahrzeug, umfassend eine Außenwand (11) und mindestens einen von der Außenwand begrenzten inneren Aufnahmeraum (30), im Inneren des inneren Aufnahmeraumes befindliche Befestigungsmittel und mindestens ein Detektionsorgan (20) für Umgebungsdaten des Fahrzeugs, das dazu eingerichtet ist, mit den Befestigungsmitteln fest verbunden zu werden, derart, dass der Sichtfeldwinkel (D) des Detektionsorgans auf den toten Winkel des Fahrzeugs ausgerichtet ist, um das Vorhandensein eines im toten Winkel befindlichen Objekts zu erkennen, wenn das aerodynamische Heckverkleidungselement am Fahrzeug befestigt ist, wobei das aerodynamische Heckverkleidungselement aus einem im Wesentlichen vertikalen seitlichen Spoiler (10) besteht, der dazu bestimmt ist, einen zentralen Spoiler (3) zu verlängern, der dazu eingerichtet ist, sich in einer Querrichtung des Fahrzeugs in der Verlängerung des Dachs (2) des Fahrzeugs und die Heckklappe (4) des Fahrzeugs überragend zu erstrecken, **dadurch gekennzeichnet, dass** das Verkleidungselement zwei seitliche Wandungen (31, 32) umfasst, die den inneren Aufnahmeraum (30) definieren, wobei die Befestigungsmittel an jeder seitlichen Wandung eine Gleitführung (41, 42) umfassen, um jeweils entsprechende Montagemittel des Detektionsorgans gleitend aufzunehmen.

2. Verkleidungselement nach dem vorhergehenden Anspruch, **dadurch gekennzeichnet, dass** sich die Gleitführungen der seitlichen Wandungen einander gegenüberliegend erstrecken.

3. Verkleidungselement nach Anspruch 1 oder 2, **dadurch gekennzeichnet, dass** das Detektionsorgan (20) ein Gehäuse (21) umfasst, das dazu bestimmt ist, in den inneren Aufnahmeraum eingesetzt zu werden, wobei die Montagemittel Zungen (25, 26, 27, 28) umfassen, die von seitlichen Längsflächen (23, 24) des Gehäuses senkrecht vorstehen.

4. Verkleidungselement nach dem vorhergehenden Anspruch, **dadurch gekennzeichnet, dass** die Gleitführungen (41, 42) jeweils einen Translationsanschlag des Gehäuses umfassen.

5. Verkleidungselement nach Anspruch 3 oder 4, **dadurch gekennzeichnet, dass** die Zungen vordere (25, 26) und hintere Zungen (27, 28) umfassen, die dazu eingerichtet ist, jeweils unter entsprechenden vorderen (37, 38) und hinteren Laschen (39, 40) der seitlichen Wandungen in Eingriff zu kommen, die eine Anlagefläche (35, 36) überragen, indem sie senkrecht von den seitlichen Wandungen vorstehen, um die Gleitführungen zu bilden.

6. Verkleidungselement nach dem vorhergehenden Anspruch, **dadurch gekennzeichnet, dass** die hinteren Laschen (39, 40) dazu eingerichtet sind, eine Anlagefläche (392, 402) zu bilden, die geeignet ist, an einer oberen Längsfläche (29) des Gehäuses in Eingriff zu kommen.

7. Verkleidungselement nach einem der vorhergehenden Ansprüche, **dadurch gekennzeichnet, dass** das Detektionsorgan (20) einen Verbinder (22) für die Verbindung des Detektionsorgans mit einem Kabelbaum (23) umfasst, wobei der Kabelbaum zum seitlichen Spoiler geführt wird und dabei im zentralen Spoiler verläuft.

8. Kraftfahrzeug, welches ein aerodynamisches Verkleidungselement (10) nach einem der vorhergehenden Ansprüche umfasst.

## Claims

1. Rear aerodynamic fairing element (10) for a motor vehicle, comprising an outer wall (11) and at least one inner housing (30) delimited by said outer wall, fastening means situated inside said inner housing and at least one detection member (20) for detecting environmental data relating to the vehicle, said detection member being designed to be secured to said fastening means such that the field-of-view angle (D) of said detection member is oriented toward the blind spot of the vehicle so as to detect the presence of an object located in said blind spot when said rear aerodynamic fairing element is fastened to the vehicle, said rear aerodynamic fairing element being constituted by an essentially vertical lateral deflector (10) intended to extend a central deflector (3) designed to extend in a transverse direction of the vehicle in the continuation of the roof (2) of the vehicle, overhanging the tailgate (4) of the vehicle, **characterized in that** the fairing element comprises two lateral partitions (31, 32) defining said inner housing (30), said fastening means comprising a slideway (41, 42) arranged on each lateral partition so as to respectively slidingly receive corresponding assembly means of said detection member.

2. Fairing element according to the preceding claim, **characterized in that** the slideways of said lateral partitions extend facing one another.

3. Fairing element according to Claim 1 or 2, **characterized in that**, since said detection member (20) comprises a casing (21) intended to be inserted in the inner housing, said assembly means comprise tabs (25, 26, 27, 28) protruding perpendicularly from lateral longitudinal faces (23, 24) of the casing.

4. Fairing element according to the preceding claim, **characterized in that** said slideways (41, 42) each comprise an end stop for stopping the translational movement of said casing.

5. Fairing element according to Claim 3 or 4, **characterized in that** said tabs comprise anterior (25, 26) and posterior (27, 28) tabs designed to engage respectively under corresponding anterior (37, 38) and posterior (39, 40) lugs of the lateral partitions overhanging a bearing surface (35, 36) protruding perpendicularly from said lateral partitions so as to form said slideways.

6. Fairing element according to the preceding claim, **characterized in that** said posterior lugs (39, 40) are designed to form a bearing surface (392, 402) able to engage against an upper longitudinal surface (29) of said casing.

7. Fairing element according to any one of the preceding claims, **characterized in that** said detection member (20) comprises a connector (22) for connecting said detection member to a wiring harness (23), said wiring harness being routed to said lateral deflector by passing through the central deflector.

8. Motor vehicle comprising an aerodynamic fairing element (10) according to any one of the preceding claims.
